# EUROPÄISCHE PATENTSCHRIFT

(11) **EP 0 876 082 B1**
(45) Veröffentlichungstag und Bekanntmachung des Hinweises auf die Patenterteilung: **19.02.2003**
(21) Anmeldenummer: 98201195.9
(22) Anmeldetag: 15.04.1998
(51) Int. Cl.: H05B 3/84, G02F 1/133

(54) **Anzeigevorrichtung**
Display
Dispositif d'affichage

(30) Priorität: 30.04.1997 DE 19718208
(43) Veröffentlichungstag der Anmeldung: 04.11.1998
(73) Patentinhaber: Siemens Aktiengesellschaft, 80333 München (DE)
(72) Erfinder: Laufer, Martin, Röntgenstrasse 24, 22335 Hamburg (DE); Kühnemund, Marcus, Röntgenstrasse 24, 22335 Hamburg (DE); Krohn, Martin, Röntgenstrasse 24, 22335 Hamburg (DE); Rinneburger, Klaus, Röntgenstrasse 24, 22335 Hamburg (DE)

(56) Entgegenhaltungen:
- EP-A- 0 084 873
- EP-A- 0 582 457
- GB-A- 2 291 508
- US-A- 4 448 491

## Beschreibung

Die Erfindung betrifft eine Anzeigevorrichtung, insbesondere für Kraftfahrzeuge, gemäß dem Oberbegriff des Anspruchs 1.

Eines solche Vorrichtung ist aus EP 0 582 457 A2 bekannt. In diesem Dokument ist ein transparentes Flächenheizelement, welches als eine Heizfläche einen durchsichtigen, leitenden Film hat, offenbart. Das Flächenheizelement weist aus einem Metall bestehende Elektroden zum Elektrisieren des durchsichtigen, leitenden Films auf und ist zur Verwendung unter anderem in Flüssigkristallanzeigen vorgesehen.

Eine ähnliche Vorrichtung ist aus der EP 084 873 B1 bekannt. Diese bekannte Anzeigevorrichtung weist eine Flüssigkeitskristallzelle auf, die von einer Lichtquelle hinterleuchtet wird. Zwischen der Flüssigkeitskristallzelle und der Lichtquelle ist eine Heizvorrichtung vorgesehen, die maschenartig angeordnete Heizdrähte aufweist, denen ein Heizstrom zugeführt wird.

Bei einer derartigen Anordnung wird die Heizwärme mittels der linienförmigen Leiter erzeugt. Die entstehende Heizwärme ist linienförmig und somit inhomogen über die Flüssigkeitskristallzelle verteilt. Es ist eine hohe Heizleistung erforderlich. Die maschenartige Gitterstruktur ist von außen sichtbar.

Weiterhin ist aus JP 04289685 A ein transparentes, blattförmiges Heizelement bekannt, das eine auf einem Substrat aufgebrachte Anordnung verschiedener elektrisch leitender und elektrisch nichtleitender Schichten aufweist.

Es ist Aufgabe der Erfindung, eine andere Anzeigevorrichtung der eingangs genannten Art zu schaffen, die ein gleichmäßiges Aufheizen der Flüssigkeitskristallzelle ermöglicht.

Diese Aufgabe ist erfindungsgemäß gelöst durch die Merkmale des kennzeichnenden Teils des Anspruchs 1.

Die planare Widerstandsschicht besteht vorzugsweise aus einem leitfähigen Material mit einem hohen spezifischen Widerstand. Dieser planaren Widerstandsschicht wird mittels der Elektroden ein Heizstrom zugeführt, der sich über die planare Widerstandsschicht verteilt. Somit steht eine große planare Heizfläche zur Verfügung, die eine sehr gleichmäßige Heizung der Flüssigkeitskristallzelle ermöglicht. Die Anzeigevorrichtung ist fertigungstechnisch günstig.

Die flächenförmige Heizung arbeitet mit einem sehr guten Wirkungsgrad und benötigt weniger Heizleistung als eine Heizung mit linienförmigen, maschenartig angeordneten Leiterbahnen.

Eine vorteilhafte Ausgestaltung der Erfindung ist dadurch gekennzeichnet, daß die planare Widerstandsschicht aus einem wenigstens teilweise lichtdurchlässigen Material besteht und daß die Elektroden im wesentlichen außerhalb des sichtbaren Anzeigebereiches der Anzeigevorrichtung angeordnet sind.

Eine derartige teilweise lichtdurchlässige Widerstandsschicht kann insbesondere bei Anzeigevorrichtungen, die mittels einer Lichtquelle hinterleuchtet werden, vorteilhaft eingesetzt werden. Da die Widerstandsschicht transparent ist und die Elektroden im wesentlichen außerhalb des sichtbaren Anzeigebereichs der Anzeigevorrichtung angeordnet sind, kann die planare Widerstandsschicht zwischen der Flüssigkeitskristallzelle und der Lichtquelle angeordnet werden, ohne daß die Widerstandsschicht die von außen sichtbare Anzeige beeinträchtigt.

Eine weitere vorteilhafte Ausgestaltung der Erfindung ist dadurch gekennzeichnet, daß die Elektroden im wesentlichen linienförmig ausgebildet sind.

Mittels der linienförmigen Ausbildung der Elektroden ist es möglich, der planaren Widerstandsschicht den Heizstrom sehr gleichmäßig zuzuführen. Damit läßt sich im Vergleich zu punktförmigen Elektroden eine gleichmäßigere Verteilung des Heizstromes innerhalb der planaren Widerstandsschicht erzielen und es ergibt sich eine sehr gleichmäßige Aufheizung der Flüssigkeitskristallzelle.

Eine weitere vorteilhafte Ausgestaltung der Erfindung ist dadurch gekennzeichnet, daß die Widerstandsschicht aus einem wenigstens teilweise lichtdurchlässigen Metall, insbesondere aus Indium-Zinn-Oxid, besteht.

Indium-Zinn-Oxid weist eine hohe Lichtdurchlässigkeit von ca. 90% und einen hohen spezifischen Widerstand auf.

Eine weitere vorteilhafte Ausgestaltung der Erfindung ist dadurch gekennzeichnet, daß die Elektroden mittels eines Siebdruckverfahrens auf die Widerstandsschicht aufgebracht sind.

Eine derartige Anordnung ist fertigungstechnisch günstig.

Eine weitere vorteilhafte Ausgestaltung der Erfindung ist dadurch gekennzeichnet, daß die Elektroden jeweils L-förmig ausgebildet sind.

Dadurch ist es möglich, den Elektroden den Heizstrom zentral an einer Seite der Widerstandsschicht zuzuführen.

Vorzugsweise erstreckt sich jeweils einer der Schenkel der L-förmigen Elektroden oberhalb bzw. unterhalb des sichtbaren Anzeigebereichs der Anzeigevorrichtung, während der jeweils andere Schenkel der Elektroden seitlich des sichtbaren Anzeigebereichs angeordnet ist.

Ein schematisch dargestelltes Ausführungsbeispiel der Erfindung wird nachfolgend anhand der Zeichnung in den Figuren 1 bis 3 näher erläutert. Es zeigen:
- Fig. 1: eine perspektivische Explosionsdarstellung einer Anzeigevorrichtung mit einer Flüssigkeitskristallzelle als Anzeigeelement, welche von Beleuchtungsmitteln hinterleuchtet wird, wobei zwischen den Beleuchtungsmitteln und der Flüssigkeitskristallzelle ein planares Heiz-Diffusor-Element angeordnet ist,
- Fig. 2: eine schematische Schnittdarstellung des Heiz-Diffusor-Elementes.
- Fig. 3: eine Draufsicht auf das Heiz-Diffusor-Element,

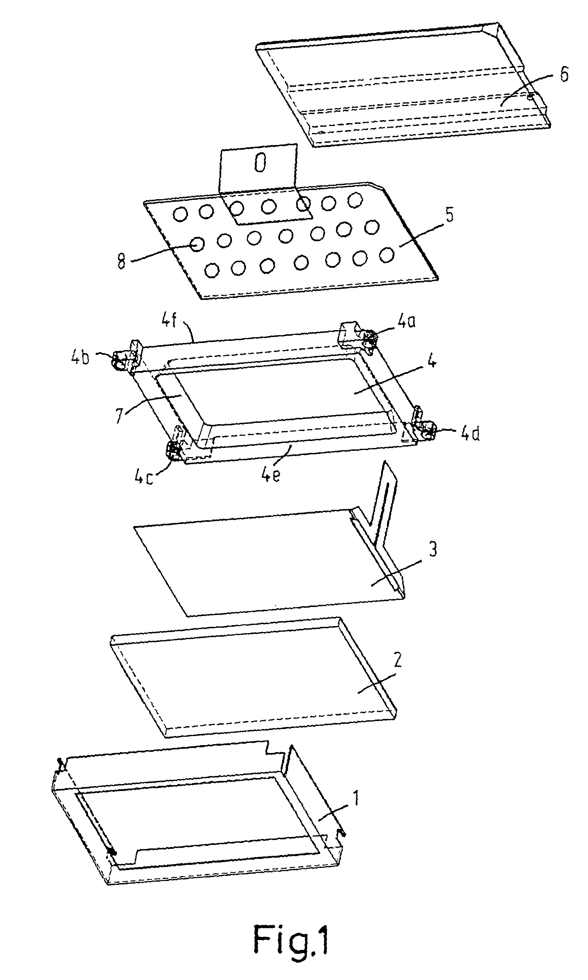

Fig. 1 zeigt eine perspektivische Explosionsdarstellung einer Anzeigevorrichtung für Kraftfahrzeuge. Die Anzeigevorrichtung weist einen Blechrahmen 1, eine Flüssigkeitskristallzelle 2, ein Heiz-Diffusor-Element 3, einen Kunststoffrahmen 4, eine Beleuchtungsleiterplatte 5 und eine Elektronikleiterplatte 6 auf.

Die Beleuchtungsleiterplatte 5 weist eine Vielzahl von Leuchtdioden 8 auf, mittels derer die Flüssigkeitskristallzelle 2 hinterleuchtet wird. Die Elektronikleiterplatte 6 dient der Ansteuerung und Stromversorgung der Beleuchtungsleiterplatte 5, des Heiz-Diffusor-Elementes 3 sowie der Flüssigkeitskristallzelle 2.
Der Reflektorrahmen 4 weist Reflektorflächen 7 auf, die das von der Beleuchtungsleiterplatte 5 erzeugte Licht reflektieren.
Der Reflektorrahmen 4 weist vier Befestigungselemente 4a, 4b, 4c und 4d auf, die zur Befestigung des Reflektorrahmens 4 an dem Blechrahmen 1 vorgesehen sind.
Die Flüssigkeitskristallzelle 2 und das Heiz-Diffusor-Element 3 sind aufeinander zwischen dem Blechrahmen 1 und der Vorderseite 4e des Reflektorrahmens 4 angeordnet.
Auf der Rückseite 4f des Reflektorrahmens 4 sind die Beleuchtungsleiterplatte 5 und die Elektronikleiterplatte 6 angeordnet.

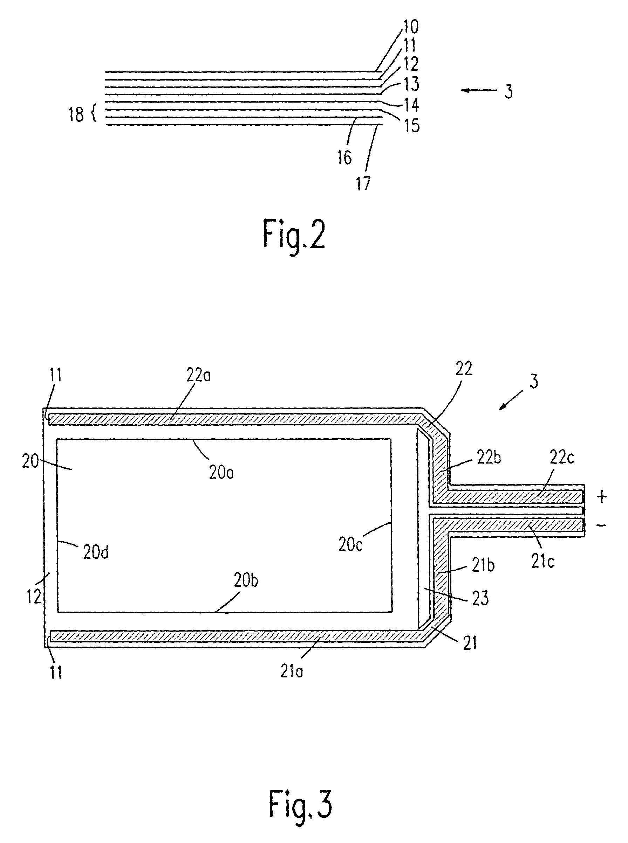

Fig. 2 zeigt einen Querschnitt des Heiz-Diffusor-Elementes 3. Das Heiz-Diffusor-Element 3 weist eine Schutzlackschicht 10, eine Elektrodenschicht 11, eine Widerstandsschicht 12 aus Indium-Zinn-Oxid, eine Polyesterfolie 13, eine Klebeschicht 14, eine Polycarbonatfolie 15, eine weiße Siebdruckschicht 16 und eine orange Siebdruckschicht 17 auf. Diese einzelnen Schichten sind in der oben bezeichneten Reihenfolge übereinander angeordnet.
Die Polyesterfolie 13 ist lichtdurchlässig und dient als Trägerelement für die übrigen Elemente des Heiz-Diffusor-Elementes 3.
Auf die eine Seite der Polyesterfolie 13 ist die Widerstandsschicht 12 aus Indium-Zinn-Oxid aufgedampft. Indium-Zinn-Oxid ist lichtdurchlässig und weist einen hohen spezifischen Widerstand auf. Auf der Widerstandsschicht 12 ist die Elektrodenschicht 11 mittels eines Siebdruckverfahrens aufgebracht. Die Elektrodenschicht 11 wird mittels der Schutzlackschicht 10 abgedeckt.
Auf der anderen Seite der Polyesterfolie 13 ist mittels einer Klebeschicht 14 eine Polycarbonatfolie 15 angeordnet. Auf der Polycarbonatfolie 15 sind mittels eines Siebdruckverfahrens eine weiße Siebdruckschicht 16 und eine orange Siebdruckschicht 17 aufgebracht. Die Polycarbonatfolie 15 zusammen mit der weißen Siebdruckschicht 16 bilden eine Diffusorschicht 18. Die Diffusorschicht 18 hat die Aufgabe, das von den Leuchtdioden 8 der Beleuchtungsleiterplatte 5 gemäß Fig. 1 erzeugte Licht zu zerstreuen, um eine gleichmäßige Beleuchtung der Flüssigkeitskristallzelle 2 zu erzielen.

Die orange Siebdruckschicht 17 erzeugt eine orangefarbene Hinterleuchtung der Flüssigkeitskristallzelle 2. Die orange Siebdruckschicht 17 kann auch durch eine andersfarbige Siebdruckschicht ersetzt werden, um eine andersfarbige Hinterleuchtung zu erhalten.

Die integrale Ausbildung des Heiz-Diffüsor-Elementes 3 ist sehr kostengünstig zu fertigen.

Eine weitere Integration ist z.B. dadurch möglich, daß die Polycarbonatfolie 15 entfällt und die Siebdruckschichten 16 und 17 direkt auf die Polyesterfolie 13 aufgedruckt werden.

Fig. 3 zeigt eine Draufsicht auf das Heiz-Diffusor-Element 3 mit der Elektrodenschicht 11 und der Widerstandsschicht 12. Die Schutzlackschicht 10 ist in dieser Draufsicht nicht dargestellt.

Zusätzlich ist in der Fig. 3 der von außen sichtbare, aktive Anzeigebereich 20 der Anzeigevorrichtung dargestellt. Die Elektrodenschicht 11 weist eine erste Elektrode 21 und eine zweite Elektrode 22 auf, die mittels Siebdruck auf der Widerstandsschicht 12 aufgebracht sind. Die erste Elektrode 21 und die zweite Elektrode 22 sind linienförmig ausgebildet und außerhalb des sichtbaren Anzeigebereichs der Anzeigevorrichtung 20 angeordnet. Der sichtbare Anzeigebereich 20 ist rechteckig ausgebildet und weist eine obere Kante 20a, eine untere Kante 20b, eine rechte Seitenkante 20c und eine linke Seitenkante 20d auf.
Die erste Elektrode 21 weist einen linienförmigen Schenkelbereich 21a auf, der sich unterhalb der unteren Kante 20b parallel zu dieser unteren Kante 20b erstreckt. Die zweite Elektrode 22 weist einen linienförmigen Schenkelbereich 22a auf, der sich oberhalb der oberen Kante 20a des sichtbaren Anzeigebereichs 20 parallel zu der oberen Kante 20a erstreckt. Die erste Elektrode 21 weist einen Stirnbereich 21b auf, der sich senkrecht zu dem ersten Schenkelbereich 21a erstreckt und seitlich von der Kante 20c des sichtbaren Anzeigebereichs 20 angeordnet ist. Die zweite Elektrode 22 weist einen Stirnbereich 22b auf, der sich senkrecht zu dem Schenkelbereich 22a erstreckt und seitlich von der der Kante 20c des sichtbaren Anzeigebereichs 20 angeordnet ist. Schließlich weist die erste Elektrode 21 einen Anschlußbereich 21c und die zweite Elektrode 22 einen Anschlußbereich 22c auf. Die Anschlußbereiche 21c und 22c schließen sich jeweils an die Stirnbereiche 21b bzw. 22b an und erstrecken sich senkrecht zu den Stirnbereichen 21b bzw. 22b.

Die Anschlußbereiche 21c und 22c sind elektrisch voneinander isoliert.
Zwischen der Kante 20c des sichtbaren Anzeigebereichs 20 und den Stirnbereichen 21b bzw. 22b der ersten Elektrode 21 bzw. der zweiten Elektrode 22 ist ein Isolierbereich 23 vorgesehen, der die Stirnbereiche 21b und 22b elektrisch von der Widerstandsschicht 12 isoliert. Dies kann z.B. dadurch realisiert werden, daß die Widerstandsschicht 12 an dieser Stelle weggeätzt oder ausgestanzt ist.

Die erste Elektrode 21 und die zweite Elektrode 22 sind dazu vorgesehen, der Widerstandsschicht 12 einen Heizstrom zuzuleiten. Der Anschlußbereich 21c der ersten Elektrode 21 ist mit einem negativen Spannungspotential der Elektronikleiterplatte 6 gemäß Fig. 1 gekoppelt. Der Anschlußbereich 22c der zweiten Elektrode 22 ist mit einem positiven Spannungspotential der Elektronikleiterplatte 6 gemäß Fig. 1 gekoppelt. Dementsprechend wirkt die erste Elektrode 21 als Kathode und die zweite Elektrode 22 als Anode.

Der Heizstrom fließt somit von dem ersten Anschlußbereich 21c der ersten Elektrode 21 über den Stirnbereich 21b zu dem linienförmigen Schenkelbereich 21a (tatsächliche Stromrichtung). Von hier aus verteilt sich der Strom dann gleichmäßig und flächenförmig über die Widerstandsschicht 12, wodurch eine gleichmäßige Wärmeentwicklung hervorgerufen wird und die Flüssigkeitskristallzelle 2 gemäß Fig. 1 sehr gleichmäßig geheizt wird. Der Strom fließt dann über den linienförmigen Schenkelbereich 22a und den Stirnbereich 22b zu dem zweiten Anschlußbereich 22c der zweiten Elektrode 22 zurück.

## Patentansprüche

1. Anzeigevorrichtung, insbesondere für Kraftfahrzeuge, mit wenigstens einer Flüssigkeitskristallzelle (2) als Anzeigeelement und einer elektrischen Heizvorrichtung für die Flüssigkeitskristallzelle (2), wobei die Heizvorrichtung eine im wesentlichen planare Widerstandsschicht (12) aufweist und wobei Elektroden (21, 22) vorgesehen sind, mittels derer der Widerstandsschicht (12) ein Heizstrom zuführbar ist,
**dadurch gekennzeichnet, daß** Beleuchtungsmittel (6, 8), insbesondere Leuchtdioden (8) oder Glühlampen, zur Hinterleuchtung der Flüssigkeitskristallzelle (2) vorgesehen sind, daß eine Diffusorschicht (18) zur Zerstreuung des von den Beleuchtungsmitteln (6, 8) erzeugten Lichts vorgesehen ist und daß die Widerstandsschicht (12) zusammen mit der Diffusorschicht (18) integriert ist.

2. Anzeigevorrichtung nach Anspruch 1, **dadurch gekennzeichnet, daß** die Widerstandsschicht (12) auf einer Seite einer transparenten Kunststoffolie (13) aufgebracht, insbesondere aufgedampft ist, daß auf der anderen Seite der transparenten Kunststoffolie (13) die Diffusorschicht (18) angeordnet ist und daß die Diffusorschicht eine lichtstreuende Folie, insbesondere aus Polycarbonat, (15) aufweist, auf der mittels Siebdruck eine reflektierende Siebdruckschicht (16) aufgebracht ist.

## Claims

1. Display device, in particular for motor vehicles, having at least one liquid crystal cell (2) as a display element and an electric heating device for the liquid crystal cell (2), the heating device having a substantially planar resistance layer (12) and electrodes (21, 22) being provided, by means of which a heating current can be fed to the resistance layer (12), **characterized in that** illuminating means (6, 8), in particular light-emitting diodes (8) or incandescent lamps, are provided to backlight the liquid crystal cell (2), **in that** a diffuser layer (18) for scattering the light produced by the illuminating means (6, 8) is provided, and **in that** the resistance layer (12) is integrated together with the diffuser layer (18).

2. Display device according to Claim 1, **characterized in that** the resistance layer (12) is applied, in particular vapour-deposited, on one side of a transparent plastic film (13), **in that** the diffuser layer (18) is arranged on the other side of the transparent plastic film (13), and **in that** the diffuser layer has a light-scattering film, in particular of polycarbonate (15), to which a reflective screen printed layer (16) is applied by means of screen printing.

## Revendications

1. Dispositif d'affichage, en particulier pour véhicules à moteur, comportant au moins une cellule à cristaux liquides (2) comme élément d'affichage et un dispositif de chauffage électrique pour la cellule à cristaux liquides (2), le dispositif de chauffage comportant une couche résistive pour l'essentiel planaire (12) et des électrodes (21, 22) étant prévues, au moyen desquelles un courant de chauffage peut être amené à la couche résistive (12), **caractérisé en ce que** des moyens d'éclairage (6, 8), en particulier des diodes électroluminescentes (8) ou des lampes à incandescence sont prévues pour le rétro-éclairage de la cellule à cristaux liquides (2), **en ce qu'**une couche diffuseuse (18) est prévue pour la dispersion de la lumière produite par les moyens d'éclairage (6, 8) et **en ce que** la couche résistive (12) est intégrée avec la couche diffuseuse (18).

2. Dispositif d'affichage selon la revendication 1, **caractérisé en ce que** la couche résistive (12) est placée sur une face d'une feuille de matière synthétique transparente (13), en particulier par vaporisation sous vide, **en ce que** la couche diffuseuse (18) est placée sur l'autre face de la feuille de matière synthétique transparente (13) et **en ce que** la couche diffuseuse comporte une feuille dispersant la lumière, en particulier en polycarbonate (15), sur laquelle est déposée par sérigraphie une couche sérigraphique réfléchissante (16).
